# EUROPÄISCHE PATENTSCHRIFT

(11) **EP 3 308 042 B1**
(45) Veröffentlichungstag und Bekanntmachung des Hinweises auf die Patenterteilung: **07.11.2018**
(21) Anmeldenummer: 17729842.9
(22) Anmeldetag: 07.06.2017
(51) Int. Cl.: F16C 17/10, F16C 33/04, F16C 33/08, F16C 33/20, F16C 23/10

(54) **GLEITLAGERBUCHSE**
PLAIN BEARING BUSH
COUSSINET LISSE

(30) Priorität: 27.06.2016 DE 102016111757
(43) Veröffentlichungstag der Anmeldung: 18.04.2018
(73) Patentinhaber: KS Gleitlager GmbH, 68789 St. Leon-Rot (DE)
(72) Erfinder: HÄCKER, Stefan, 76698 Ubstadt-Weiher (DE); BAUR, Wolfgang, 76698 Ubstadt-Weiher (DE); KLEIN, Andreas, 68789 St. Leon-Rot (DE); GORFF, Martin, 74639 Zweiflingen (DE)
(74) Vertreter: DREISS Patentanwälte PartG mbB
(86) Internationale Anmeldenummer: PCT/EP2017/063795
(87) Internationale Veröffentlichungsnummer: WO 2018/001688

(56) Entgegenhaltungen:
- WO-A1-2005/066474
- DE-A1- 10 107 109
- DE-A1- 19 508 418
- DE-A1- 19 725 227
- US-A- 3 929 392

## Beschreibung

Die vorliegende Erfindung betrifft eine Gleitlagerbuchse zur Aufnahme einer Welle oder eines Hebels, wobei die aufgenommene Welle bzw. der aufgenommene Hebel in der Gleitlagerbuchse eine radiale Beweglichkeit in einer in radialer Richtung verlaufenden Ebene aufweist. Aus dem Stand der Technik sind derartige Gleitlagerbuchsen bekannt, die dadurch hergestellt sind, dass eine außen und innen zylindrisch ausgeformte Gleitlagerbuchse an ihrer Innenseite derart bearbeitet wird, dass der Querschnitt ihrer inneren Öffnung ovalförmig ausgebildet ist.

Die DE 101 07 109 A1 beschreibt eine Bundbuchse mit einem angeformten Bund ohne Stoßfuge.

Aus der DE 197 25 227 A1 ist ein Kurbelschlaufenrahmen bekannt.

Die WO 2005 / 066 474 A1 beschreibt eine Kolbenanordnung.

Ein Problem bei derartigen Gleitlagerbuchsen ist, dass die Herstellung aufwändig und damit kostenintensiv ist. Aufgabe der vorliegenden Erfindung ist es, eine Gleitlagerbuchse zu schaffen, die unter Bereitstellung einer radialen Beweglichkeit in einer in radialer Richtung verlaufenden Ebene eine Welle oder einen Hebel aufnehmen kann und kostengünstig und einfach herstellbar ist.

Diese Aufgabe wird erfindungsgemäß gelöst, durch eine gerollte Gleitlagerbuchse mit einer Stoßfuge, mit einer axialen Richtung, mit einer radialen Richtung und einer Umfangsrichtung, umfassend ein erstes teilzylindrisches Segment und ein zweites teilzylindrisches Segment, die einander diametral gegenüberliegend angeordnet sind, wobei eines der zylindrischen Segmente die Stoßfuge umfasst, und ein drittes Segment und ein viertes Segment, die jeweils von der Zylinderform des ersten und des zweiten Segments abweichen und in Umfangsrichtung zwischen dem ersten und dem zweiten Segment und einander diametral gegenüberliegend angeordnet sind, wobei das erste und das zweite Segment eine teilzylindrische Innen- und Außenumfangsfläche aufweist, und wobei das dritte und das vierte Segment je eine Ebene in den Umfangsflächen aufweisen, die zueinander parallel verlaufen, wobei ein kleinster radialer Abstand der Innenumfangsflächen des dritten und des vierten Segments voneinander kleiner ist als ein Buchseninnendurchmesser, der einem entlang der Erstreckung der Innenumfangsflächen des ersten und des zweiten Segments gleichbleibenden radialen Abstand der Innenumfangsflächen des ersten und des zweiten Segments voneinander entspricht. Die Innenumfangsflächen des dritten und des vierten Segments liegen an einer aufgenommenen Welle bzw. an einem aufgenommenen Hebel an. Da der radiale Abstand der Innenumfangsflächen des ersten und des zweiten Segments voneinander, also der Buchseninnendurchmesser gleichbleibend und größer ist als der kleinste radiale Abstand der Innenumfangsfläche des dritten und des vierten Segments, hat die aufgenommene Welle Spiel und kann in Richtung des ersten bzw. des zweiten Segments, also in einer Ebene, die parallel zu dem dritten und vierten Segment verläuft, verschoben oder verkippt werden. Die erfindungsgemäße Gleitlagerbuchse lässt sich in einfacher Weise herstellen, da sie in einem einzigen Rollprozess geschaffen werden kann, wobei die Gleitlagerbuchse derart gerollt wird, dass die Stoßfuge im ersten Segment oder im zweiten Segment angeordnet ist. Die Innenumfangsfläche des ersten Segments und die Innenumfangsfläche des zweiten Segments liegen also auf einer Mantelfläche eines geraden inneren Kreiszylinders mit einem Buchseninnendurchmesser. Der innere Kreiszylinder mit dem Buchseninnendurchmesser entspricht dabei dem Verlauf der Innenumfangsflächen, falls die Gleitlagerbuchse insgesamt komplett die Form eines geraden Kreiszylinders aufweisen würde. Aufgrund dieser Gestaltung lässt sich die erfindungsgemäße Gleitlagerbuchse in einfacher Weise herstellen.

Von Vorteil ist dabei auch, wenn die Außenumfangsfläche des ersten Segments und die Außenumfangsfläche des zweiten Segments auf einer Mantelfläche eines geraden äußeren Kreiszylinders mit einem Aufnahmedurchmesser liegen. Hierdurch lässt sich die erfindungsgemäße Gleitlagerbuchse in einfacher Weise in eine Lageraufnahme einführen, wobei die Lageraufnahme in einfacher Weise durch eine gerade kreiszylindrische Bohrung mit Durchmesser des Aufnahmedurchmessers geschaffen sein kann. Dies ermöglicht eine Verwendung der erfindungsgemäßen Gleitlagerbuchsen in herkömmlichen Aufnahmelagern.

Von Vorteil ist auch, wenn das dritte und das vierte Segment je eine ebene Außenumfangsfläche aufweisen, die zueinander parallel verlaufen. Hierdurch kann die erfindungsgemäße Gleitlagerbuchse aus einem bandförmigen Ausgangsmaterial gerollt werden, ohne dass dieses Ausgangsmaterial unterschiedliche Materialdicken aufweisen muss.

Von Vorteil ist auch, wenn das dritte und das vierte Segment jeweils eine umfängliche Erstreckung mit einem Erstreckungswinkel zwischen 20° und 80° aufweisen. Der Erstreckungswinkel wird dabei an dem Mittelpunkt der Gleitlagerbuchse in umfänglicher Richtung gemessen und entspricht dem Winkelmaß der Erstreckung des dritten und des vierten Segments, wobei also die umfängliche Erstreckung der gesamten Gleitlagerbuchse einem Erstreckungswinkel von 360° entspricht. Diese Ausführungsform stellt ein vorteilhaftes Verhältnis zwischen der Erstreckung des ersten und zweiten und des dritten und vierten Segments her, so dass bei ausreichender Lagerung der aufgenommenen Welle ein genügendes Spiel der Welle bereitgestellt ist. Von Vorteil ist auch, wenn eine Wanddicke der Gleitlagerbuchse im Bereich des dritten Segments und des vierten Segments und vorzugsweise im Bereich des ersten Segments und des zweiten Segments, wenigstens um 0,4 mm größer ist als die Quadratwurzel eines 64stels der Differenz aus dem Quadrat des Buchseninnendurchmessers und dem Quadrat des kleinsten radialen Abstands der Innenumfangsflächen des dritten und des vierten Segments. Hierdurch ist gewährleistet, dass das dritte Segment und das vierte Segment stark genug ausgeführt sind, um einen Lagerpunkt für die aufgenommene Welle zu bilden, ohne dass sich die Buchse verformt.

Vorteilhaft ist auch, wenn eine radiale Beweglichkeit in einer in radialer Richtung verlaufenden Ebene, die der Differenz aus dem Buchseninnendurchmesser und dem kleinsten radialen Abstand der Innenumfangsflächen des dritten und des vierten Segments entspricht, mindestens 1 mm beträgt. Hierdurch wird einer aufgenommenen Welle ausreichend Spiel bei gleichzeitig zuverlässiger Lagerung über die dritten und vierten Segmente gegeben.

Vorteilhaft ist auch, wenn die erfindungsgemäße Gleitlagerbuchse einen Metall/Kunststoff-Verbundwerkstoff umfasst, wobei eine dreidimensional poröse Trägerschicht vorgesehen sein kann, in welche die Kunststoffkomponente, die ein Fluorpolymer sein kann, eingebracht und gehalten ist. Die Kunststoffkomponente kann jedoch auch ein fluorfreier Kunststoff sein. Dabei weist der Metall/Kunststoff-Verbundwerkstoff vorteilhafterweise eine Stützschicht aus Stahl und eine darauf aufgesinterte dreidimensional poröse Trägerschicht aus Bronze auf, wobei in den Hohlräumen der aufgesinterten dreidimensional porösen Bronzeträgerschicht die Kunststoffkomponente, vorzugsweise PTFE (Perfluorotetraethylene) oder ein anderes Fluoropolymer, eingebracht und gehalten ist. Hierdurch ergeben sich vorteilhafte Eigenschaften der Gleitlagerbuchse in Bezug auf Stabilität, tribologische Eigenschaften sowie Verschleißbeständigkeit und Herstellungskosten.

Bevorzugt ist, wenn die erfindungsgemäße Gleitlagerbuchse einen sich radial erstreckenden Bund aufweist. Hierdurch kann radiale und axiale Lagerung durch die Gleitlagerbuchse bereitgestellt werden.

Vorteilhafterweise ist die Stoßfuge in dem ersten Segment oder in dem zweiten Segment angeordnet. Dadurch wird die Gleitlagerbuchse stabiler und kann eine Welle bzw. einen Hebel sicherer lagern.

Gegenstand der vorliegenden Erfindung ist auch eine Lagerstelle zur Lagerung einer außenzylindrischen Welle, umfassend eine kreisförmige Gehäuseöffnung für eine darin einpressbare gerollte Gleitlagerbuchse, eine gerollte Gleitlagerbuchse nach einer oder mehreren der vorangegangenen Ausführungsformen, die in die Gehäuseöffnung eingepresst ist und eine außenzylindrische Welle mit einem Wellenaussendurchmesser WA, wobei die Gehäuseöffnung zylindrisch ist und ein Abstand zwischen der jeweiligen ebenen Außenumfangsfläche des dritten und des vierten Segments und der zylindrischen Innenumfangsfläche der Gehäuseöffnung gegeben ist und wobei der kleinste radiale Abstand der Innenumfangsflächen des dritten und des vierten Segments voneinander dem Wellenaussendurchmesser WA der Welle entspricht, so dass die Welle in einer zur jeweiligen ebenen Innenumfangsfläche des dritten und des vierten Segments parallelen Ebene verschiebbar und/oder verkippbar ist. Die eben beschriebene Lagerstelle lässt sich durch die Verwendung der gerollten Gleitlagerbuchse nach einer oder mehrerer der eben beschriebenen Varianten bzw. nach einem oder mehreren der Ansprüche 1 bis 9 in vorteilhafter Weise kostengünstig herstellen, wobei eine sichere und zuverlässige Lagerung der außenzylindrischen Welle in der Lagerstelle gewährleistet ist.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlicher Kombination für die Erfindung wichtig sein können, ohne dass hierauf nochmals explizit hingewiesen wird. Es zeigen:
Figur 1 einen Schnitt durch eine erfindungsgemäße gerollte Gleitlagerbuchse;
Figur 2 eine perspektivische teilweise geschnittene Darstellung einer erfindungsgemäßen Lagerstelle; und
Figur 3 eine Seitenansicht einer alternativen Ausführungsform mit einem radial abragenden Bund.

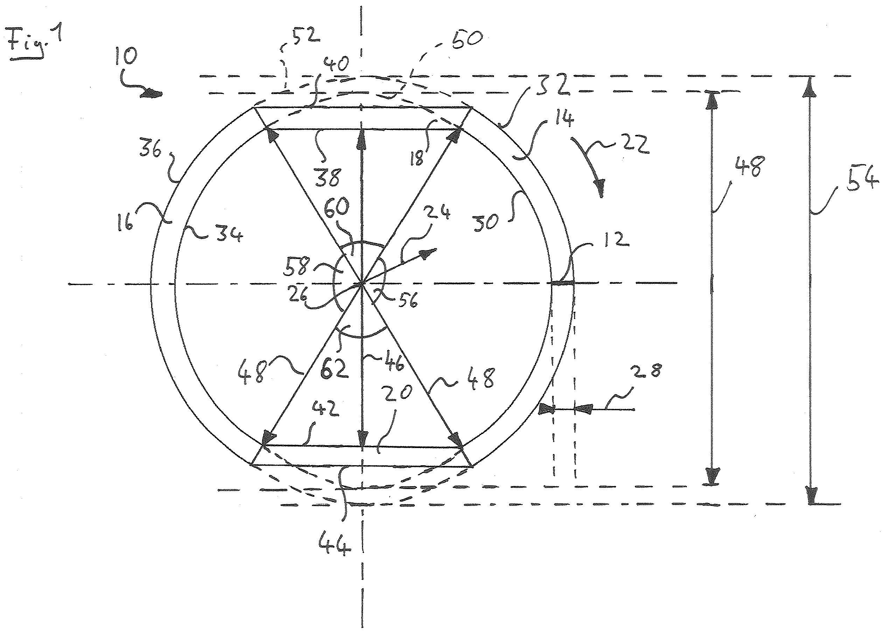

In Figur 1 trägt eine Gleitlagerbuchse insgesamt das Bezugszeichen 10. Eine Stoßfuge 12 ist in einem ersten teilzylindrischen Segment 14 angeordnet, das diametral gegenüberliegend von einem zweiten teilzylindrischen Segment 16 angeordnet ist. Ein drittes Segment 18 und ein viertes Segment 20 weichen jeweils von der Teilzylinderform des ersten Segments 14 und des zweiten Segments 16 ab und sind in einer Umfangsrichtung 22 zwischen dem ersten Segment 14 und dem zweiten Segment 16 angeordnet. Eine radiale Richtung 24 verläuft orthogonal zu einer axialen Richtung 26, die aus der Bildebene von Figur 1 herausragt. Eine Wanddicke 28 entspricht dabei der Materialdicke der einzelnen Segmente 14, 16, 18, 20 in radialer Richtung 24.

Das erste Segment 14 weist eine Innenumfangsfläche 30 und eine Außenumfangsfläche 32 auf. Entsprechend weist das zweite Segment 16 eine Innenumfangsfläche 34 und eine Außenumfangsfläche 36 auf und das dritte Segment 18 weist eine Innenumfangsfläche 38 und eine Außenumfangsfläche 40 auf. Entsprechend weist das vierte Segment 20 eine Innenumfangsfläche 42 und eine Außenumfangsfläche 44 auf. Die Innenumfangsflächen 38 und 42 des dritten Segments 18 und des vierten Segments 20 verlaufen parallel, genau wie die Außenumfangsflächen 40 und 44 dieser Segmente 18, 20.

Ein kleinster radialer Abstand der Innenumfangsflächen 38, 42 des dritten Segments 18 und des vierten Segments trägt das Bezugszeichen 46. Ein Buchseninnendurchmesser der Gleitlagerbuchse 10 trägt das Bezugszeichen 48 und entspricht dem Durchmesser eines inneren Kreiszylinders 50, auf dessen Mantelfläche sowohl die Innenumfangsflächen 30 und 34 des ersten Segments 14 und des zweiten Segments 16 liegen. Entsprechend liegen die Außenumfangsflächen 32 und 36 des ersten Segments 14 und des zweiten Segments 16 auf der Mantelfläche eines äußeren Kreiszylinders 52, der einen Aufnahmedurchmesser 54 aufweist.

Das erste Segment 14 weist einen Erstreckungswinkel 56 auf. Entsprechend weisen das zweite Segment 16, das dritte Segment 18 und das vierte Segment 20 jeweilige Erstreckungswinkel 58, 60, 62 auf. Die Erstreckungswinkel 56, 58, 60, 62 geben dabei jeweils die Erstreckung der einzelnen Segmente 14, 16, 18 und 20 in umfänglicher Richtung 22 in Winkelmaß an. Die Summe aller Erstreckungswinkel der vier Segmente ist 360°. Die Erstreckungswinkel 60 und 62 des dritten und vierten Segments sind vorliegend gleich und betragen 62°. Entsprechend sind auch die Erstreckungswinkel 56 und 58 des ersten Segments 14 und des zweiten Segments 16 gleich und betragen jeweils 118°.

Die Wanddicke 28 der Gleitlagerbuchse ist entlang aller vier Segmente 14, 16, 18, 20 gleich und ist um 0,4mm größer als die Quadratwurzel eines 64stels der Differenz aus dem Quadrat des Buchseninnendurchmessers 48 und dem Quadrat des kleinsten radialen Abstands 46 der Innenumfangsflächen 38 und 42 des dritten Segments 18 und des vierten Segments 20.

Die in Figur 1 gezeigte Gleitlagerbuchse 10 besteht aus einem Metall/Kunststoff-Verbundwerkstoff, wobei eine dreidimensional poröse Trägerschicht vorgesehen ist, in welche die Kunststoffkomponente, die ein Fluorpolymer ist, eingebracht und gehalten ist. Dabei weist der Metall/Kunststoff-Verbundwerkstoff eine Stützschicht aus Stahl und eine darauf aufgesinterte dreidimensional poröse Trägerschicht aus Bronze auf, wobei in den Hohlräumen der aufgesinterten dreidimensional porösen Bronzeträgerschicht PTFE (Perfluorotetraethylene) eingebracht und gehalten ist.

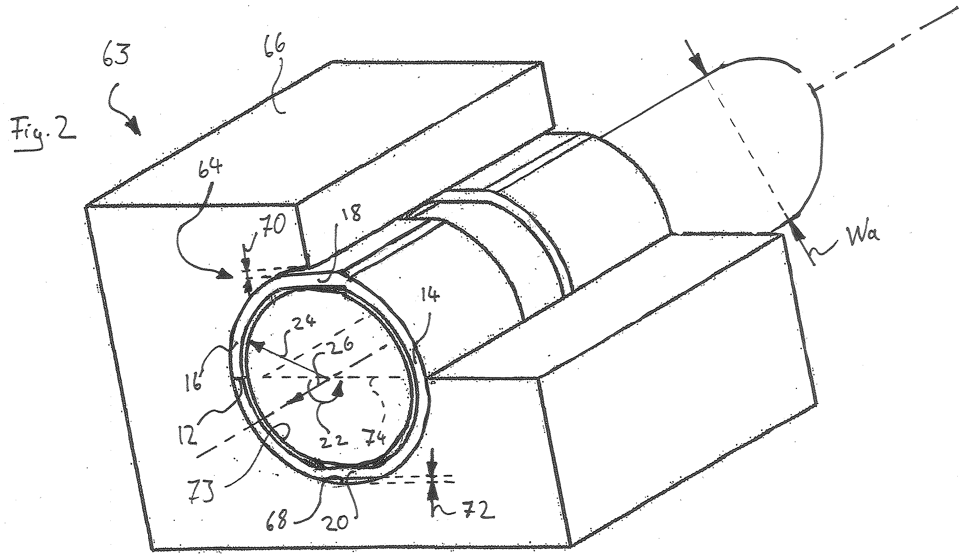

Figur 2 zeigt eine Lagerstelle 63, wobei die Gleitlagerbuchse 10 aus Figur 1 in einer Gehäuseöffnung 64 aufgenommen ist. Dabei ist ein Gehäuse 66, das die Gehäuseöffnung 64 umfasst, nur teilweise bzw. mit einem Ausbruch dargestellt.

Eine zylindrische Innenumfangsfläche 68 der Gehäuseöffnung 64 ist gegenüber den Außenumfangsflächen 40, 44 des dritten Segments 18 und des vierten Segments 20 jeweils beabstandet, wobei dieser Abstand in Figur 2 bezüglich des dritten Segments 18 das Bezugszeichen 70 und bezüglich des vierten Segments 20 das Bezugszeichen 72 trägt. Durch die gerade zueinander angeordneten und parallel zueinander verlaufenden Innenumfangsflächen 38 und 42 des dritten Segments 18 und des vierten Segments 20 erhält eine Welle 73 mit einem Wellendurchmesser Wa, der dem kleinsten radialen Abstand 46 der Innenumfangsflächen 38 und 42 des dritten Segments 18 und des vierten Segments 20 entspricht, wenn sie die Lagerstelle 63 eingeführt ist, ein Spiel, lässt sich also in einer Ebene 74, die parallel zur Innenumfangsfläche 38 bzw. 42 des dritten Segments 18 und des vierten Segments 20 verläuft, verschieben und/oder verkippen.

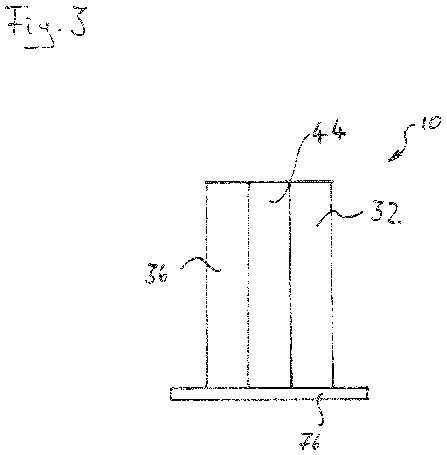

Figur 3 zeigt eine alternative Ausführungsform der Gleitlagerbuchse 10, die sich von der in Figur 1 gezeigten Gleitlagerbuchse 10 durch einen radial abragenden Bund 76 unterscheidet.

## Patentansprüche

1. Gerollte Gleitlagerbuchse (10) mit einer Stoßfuge (12), mit einer axialen Richtung (26), einer radialen Richtung (24) und einer Umfangsrichtung (22), **dadurch gekennzeichnet, dass** die Gleitlagerbuchse umfasst: ein erstes teilzylindrisches Segment (14) und ein zweites teilzylindrisches Segment (16), die einander diametral gegenüberliegend angeordnet sind, und ein drittes Segment (18) und ein viertes Segment (20), die jeweils von der Teilzylinderform des ersten und des zweiten Segments (14, 16) abweichen und in Umfangsrichtung (22) zwischen dem ersten und dem zweiten Segment (14, 16) und einander diametral gegenüberliegend angeordnet sind, wobei das erste und das zweite Segment (14, 16) je eine teilzylindrische Innenumfangsfläche (30, 34) und Außenumfangsfläche (32, 36) aufweisen, und wobei das dritte und das vierte Segment (18, 20) je eine ebene Innenumfangsfläche (38, 42) aufweisen, die zueinander parallel verlaufen, wobei ein kleinster radialer Abstand (46) der Innenumfangsflächen (38, 42) des dritten und des vierten Segments (18, 20) voneinander kleiner ist als ein Buchseninnendurchmesser (48), der einem entlang der Erstreckung der Innenumfangsflächen (30, 34) des ersten und des zweiten Segments (14, 16) gleichbleibenden radialen Abstand (48) der Innenumfangsflächen (30, 34) des ersten und des zweiten Segments (14, 16) voneinander entspricht.

2. Gleitlagerbuchse nach Anspruch 1, **dadurch gekennzeichnet, dass** die Außenumfangsfläche (32) des ersten Segments (14) und die Außenumfangsfläche (36) des zweiten Segments (16) auf einer Mantelfläche eines geraden äußeren Kreiszylinders (52) mit einem Aufnahmedurchmesser (54) liegen.

3. Gleitlagerbuchse nach Anspruch 1 oder 2, **dadurch gekennzeichnet, dass** das dritte und das Segment (18, 20) je eine ebene Außenumfangsfläche (40, 44) aufweisen, die zueinander parallel verlaufen.

4. Gleitlagerbuchse nach einem oder mehreren der vorangegangenen Ansprüche, **dadurch gekennzeichnet, dass** das dritte und das vierte Segment (18, 20) jeweils eine umfängliche Erstreckung mit einem Erstreckungswinkel (60, 62) zwischen 20° und 80° aufweisen.

5. Gleitlagerbuchse nach einem oder mehreren der vorangegangenen Ansprüche, **dadurch gekennzeichnet, dass** eine Wanddicke (28) der Gleitlagerbuchse (10) im Bereich des dritten Segments (18) und des vierten Segments (20), und vorzugsweise im Bereich des ersten Segments (14) und des zweiten Segments (16), wenigstens um 0,4 mm größer ist als die Quadratwurzel eines Vierundsechzigstels der Differenz aus dem Quadrat des Buchseninnendurchmessers (48) und dem Quadrat des kleinsten radialen Abstands (46) der Innenumfangsflächen (38, 42) des dritten und des vierten Segments (18, 20).

6. Gleitlagerbuchse einem oder mehreren der vorangegangenen Ansprüche, **dadurch gekennzeichnet, dass** eine radiale Beweglichkeit in einer in radialer Richtung verlaufenden Ebene, die der Differenz aus dem Buchseninnendurchmesser (48) und dem kleinsten radialen Abstand (46) der Innenumfangsflächen (38, 42) des dritten und des vierten Segments (18, 20) entspricht, mindestens 1 mm beträgt.

7. Gleitlagerbuchse nach einem oder mehreren der vorangegangenen Ansprüche, **dadurch gekennzeichnet, dass** sie einen Metall/Kunststoff-Verbundwerkstoff umfasst, wobei eine dreidimensional poröse Trägerschicht vorgesehen sein kann, in welche die Kunststoffkomponente, die vorzugsweise Fluorpolymer ist, eingebracht und gehalten sein kann.

8. Gleitlagerbuchse nach einem oder mehreren der vorangegangenen Ansprüche, **dadurch gekennzeichnet, dass** die Gleitlagerbuchse (10) einen sich radial erstreckenden Bund (76) aufweist.

9. Gleitlagerbuchse nach einem oder mehreren der vorangegangenen Ansprüche, **dadurch gekennzeichnet, dass** die Stoßfuge (12) in dem ersten Segment (14) oder in dem zweiten Segment (16) angeordnet ist.

10. Lagerstelle (63) zur Lagerung einer außenzylindrischen Welle (73) oder einer Stange, umfassend eine Gehäuseöffnung (64) für eine darin einpressbare gerollte Gleitlagerbuchse (10), eine gerollte Gleitlagerbuchse (10) nach einem oder mehreren der vorstehenden Ansprüche, die in die Gehäuseöffnung (64) eingepresst ist, und eine außenzylindrische Welle (73) oder Stange mit einem Wellenaußendurchmesser Wa, wobei die Gehäuseöffnung (64) innenzylindrisch ist und ein Abstand zwischen der jeweiligen ebenen Außenumfangsfläche (40, 44) des dritten und vierten Segments (18, 20) und der zylindrischen Innenumfangsfläche (68) der Gehäuseöffnung (64) gegeben ist, und wobei der kleinste radiale Abstand (46) der Innenumfangsflächen (38, 42) des dritten und des vierten Segments (18, 20) voneinander dem Außendurchmesser Wa der Welle entspricht, so dass die Welle (73) oder Stange in einer zur jeweiligen ebenen Innenumfangsfläche (38, 42) des dritten und vierten Segments (18, 20) parallelen Ebene (74) verschiebbar und/oder verkippbar ist.

## Claims

1. Wrapped plain bearing bushing (10) with a butt joint (12), having an axial direction (26), a radial direction (24) and a peripheral direction (22), **characterised in that** the plain bearing bushing comprises:
a first partial cylindrical segment (14) and a second partial cylindrical segment (16), which are arranged diametrically opposite each other, and a third segment (18) and a fourth segment (20), each of which differs from the partial cylindrical form of the first and second segments (14, 16) and are arranged in peripheral direction (22) between the first and the second segments (14, 16) and diametrically opposite each other, wherein the first and the second segments (14, 16) each have a partial cylindrical inner peripheral face (30, 34) and an outer peripheral face (32, 36), and wherein the third and the fourth segment (18, 20) each have a flat inner peripheral face (38, 42) running parallel to each other, wherein a smallest radial distance (46) between the inner peripheral faces (38, 42) of the third and of the fourth segments (18, 20) from each other is smaller than a bushing internal diameter (48), corresponding to a uniformly radial distance (48) of the inner peripheral faces (30, 34) of the first and of the second segments (14, 16) from each other along the extent of the inner peripheral faces (30, 34) of the first and second segments (14, 16).

2. Plain bearing bushing according to claim 1, **characterised in that** the outer peripheral face (32) of the first segment (14) and the outer peripheral face (36) of the second segment (16) lie on a shell surface of a straight outer round cylinder (52) with a mounting diameter (54).

3. Plain bearing bushing according to claim 1 or 2, **characterised in that** the third and the segment (18, 20) each have a flat outer peripheral face (40, 44) running parallel to each other.

4. Plain bearing bushing according to one or more of the preceding claims, **characterised in that** the third and the fourth segments (18, 20) each extend peripherally with an angle (60, 62) extending between 20° and 80°.

5. Plain bearing bushing according to one or more of the preceding claims, **characterised in that** a wall thickness (28) of the plain bearing bushing (10) in the region of the third segment (18) and the fourth segment (20), and preferably in the region of the first segment (14) and the second segment (16), is greater by at least 0.4 mm than the square root of one sixty fourth of the difference between the square of the bushing inner diameter (48) and the square of the smallest radial distance (46) of the inner peripheral faces (38, 42) of the third and fourth segments (18, 20).

6. Plain bearing bushing according to one or more of the preceding claims, **characterised in that** a radial movement in a plane running in the radial direction, corresponding to the difference between the bushing inner diameter (48) and the smallest radial distance (46) of the inner peripheral faces (38, 42) of the third and fourth segments (18, 20), is at least 1 mm.

7. Plain bearing bushing according to one or more of the preceding claims, **characterised in that** it comprises a metal/plastic composite material, wherein a three dimensional porous carrier layer can be provided in which the plastic component, which is preferably fluoropolymer, can be inserted and retained.

8. Plain bearing bushing according to one or more of the preceding claims, **characterised in that** the plain bearing bushing (10) has a collar (76) extending radially.

9. Plain bearing bushing according to one or more of the preceding claims, **characterised in that** the butt joint (12) is arranged in the first segment (14) or in the second segment (16).

10. Bearing place (63) for mounting an outer cylindrical shaft (73) or a rod, comprising a housing opening (64) for a wrapped plain bearing bushing (10) pressed into it, a wrapped plain bearing bushing (10) according to one or more of the preceding claims, which is pressed into the housing opening (64), and an outer cylindrical shaft (73) or rod with a shaft outer diameter Wa, wherein the interior of the housing opening (64) is cylindrical and there is a gap between the flat outer peripheral face (40, 44) of the third and fourth segments (18, 20) and the cylindrical inner peripheral face (68) of the housing opening (64) respectively, and wherein the smallest radial distance (46) of the inner peripheral faces (38, 42) of the third and of the fourth segments (18, 20) from each other corresponds to the outer diameter Wa of the shaft, so that the shaft (73) or rod can be displaced and/or tilted in a plane (74) parallel to the flat inner peripheral face (38, 42) of the third and fourth segments (18, 20) respectively.

## Revendications

1. Douille de palier à glissement enroulée (10) ayant un joint vif (12), avec une direction axiale (26), une direction radiale (24) et une direction circonférentielle (22), **caractérisée en ce que** la de palier à glissement comprend : un premier segment partiellement cylindrique (14) et un deuxième segment partiellement cylindrique (16) qui sont agencés diamétralement opposés l'un à l'autre, et un troisième segment (18) et un quatrième segment (20), qui diffèrent chacun de la forme partiellement cylindrique des premier et deuxième segments (14, 16), et qui sont agencés dans la direction circonférentielle (22) entre les premier et deuxième segments (14, 16) et diamétralement opposés l'un à l'autre, dans laquelle les premier et deuxième segments (14, 16) présentent chacun une surface circonférentielle intérieure partiellement cylindrique (30, 34) et une surface circonférentielle extérieure (32, 36) et dans laquelle les troisième et quatrième segments (18, 20) présentent chacun une surface circonférentielle intérieure plane (38, 42) qui s'étendent mutuellement parallèles, dans laquelle une distance radiale plus petite (46) des surfaces circonférentielles intérieures (38, 42) des troisième et quatrième segments (18, 20) l'une par rapport à l'autre est inférieure à un diamètre intérieur de douille (48), qui correspond à une distance radiale constante (48) des surfaces circonférentielles extérieures (30, 34) des premier et deuxième segments (14, 16) le long de l'extension des surfaces circonférentielles extérieures (30, 34) des premier et deuxième segments (14, 16)

2. Douille de palier à glissement selon la revendication 1, **caractérisée en ce que** la surface périphérique extérieure (32) du premier segment (14) et la surface périphérique extérieure (36) du deuxième segment (16) se trouvent sur une surface d'enveloppe d'un cylindre circulaire extérieur droit (52) présentant un diamètre de réception (54).

3. Douille de palier à glissement selon la revendication 1 ou 2, **caractérisée en ce que** le troisième et le segment (18, 20) présentent chacun une surface circonférentielle extérieure plane (40, 44) qui s'étendent parallèlement l'une à l'autre.

4. Douille de palier à glissement selon une ou plusieurs des revendications précédentes, **caractérisée en ce que** le troisième et le quatrième segment (18, 20) présente chacun une extension circonférentielle avec un angle d'extension (60, 62) compris entre 20° et 80°.

5. Douille de palier à glissement selon une ou plusieurs des revendications précédentes, **caractérisée en ce qu'**une épaisseur de paroi (28) de la douille de palier à glissement (10) dans la zone du troisième segment (18) et du quatrième segment (20), et de préférence dans la zone du premier segment (14) et du deuxième segment (16), est au moins 0,4 mm supérieure à la racine carrée d'un soixante-quatrième de la différence entre le carré du diamètre intérieur de douille (48) et le carré de la plus petite distance radiale (46) des surfaces circonférentielles intérieures (38, 42) des troisième et quatrième segments (18, 20).

6. Douille de palier à glissement selon une ou plusieurs des revendications précédentes, **caractérisée par** une mobilité radiale dans un plan s'étendant dans la direction radiale, qui correspond à la différence entre le diamètre intérieur de douille (48) et la plus petite distance radiale (46) des surfaces circonférentielles intérieures (38, 42) des troisième et quatrième segments (18, 20), est d'au moins 1 mm.

7. Douille de palier à glissement selon une ou plusieurs des revendications précédentes, **caractérisé en ce qu'**elle comprend un matériau composite de métal/matière plastique, dans laquelle une couche de support poreuse tridimensionnelle peut être prévue, dans laquelle le composant en matière plastique, qui est de préférence un polymère fluoré, peut être introduit et maintenu.

8. Douille de palier à glissement selon une ou plusieurs des revendications précédentes, **caractérisée en ce que** la douille de palier à glissement (10) présente une collerette (76) s'étendant radialement.

9. Douille de palier à glissement selon une ou plusieurs des revendications précédentes, **caractérisée en ce que** le joint vif (12) est agencé dans le premier segment (14) ou dans le deuxième segment (16).

10. Point d'appui (63) pour supporter un arbre cylindrique extérieur (73) ou une tige, comprenant une ouverture de boîtier (64) pour une douille de palier à glissement (10) enroulée qui peut y être insérée, une douille de palier à glissement enroulée (10) selon une ou plusieurs des revendications précédentes, qui est insérée dans l'ouverture de boîtier (64), et un arbre cylindrique extérieur (73) ou une tige ayant un diamètre extérieur d'arbre Wa, où l'ouverture de boîtier (64) est intérieurement cylindrique, et une distance entre les surfaces circonférentielles extérieures planes respectives (40, 44) des troisième et quatrième segment (18, 20) et la surface circonférentielle intérieure cylindrique (68) de l'ouverture de boîtier (64) est donnée, et où la plus petite distance radiale (46) des surfaces circonférentielles intérieures (38, 42) des troisième et quatrième segments (18, 20) l'une par rapport à l'autre correspond au diamètre extérieur Wa de l'arbre, de sorte que l'arbre (73) ou la tige peut être déplacé(e) et/ou incliné(e) dans un plan (74) parallèle aux surfaces circonférentielles intérieures planes respectives (38, 42) des troisième et quatrième segments (18, 20).
